Europäisches Patentamt

European Patent Office

Office européen des brevets

(11) Veröffentlichungsnummer: **0 669 522 A2**

# (12) EUROPÄISCHE PATENTANMELDUNG

(21) Anmeldenummer: **95101238.4**

(22) Anmeldetag: **30.01.95**

(51) Int. Cl.6: **G01F 1/74**, G01F 1/86, G01F 1/64, G01F 1/708

(30) Priorität: **24.02.94 DE 4406046**

(43) Veröffentlichungstag der Anmeldung:
**30.08.95 Patentblatt 95/35**

(84) Benannte Vertragsstaaten:
**CH DE DK ES FR GB IT LI NL**

(71) Anmelder: **WAGNER INTERNATIONAL AG**
**Industriestrasse 22**
**CH-9450 Altstätten (CH)**

(72) Erfinder: **Adams, Horst, Dr.**
**Wasserburgerstrasse 42**
**D-88149 Nonnenhorn (DE)**
Erfinder: **Seitz, Kurt**
**In der Neugasse 35**
**CH-9443 Widnau (CH)**

(74) Vertreter: **Liesegang, Roland, Dr.-Ing.**
**FORRESTER & BOEHMERT**
**Franz-Joseph-Strasse 38**
**D-80801 München (DE)**

(54) Einrichtung und Verfahren zum Messen eines Pulver-Massestromes.

(57) Die Erfindung betrifft eine Einrichtung und ein Verfahren zum Messen eines Pulver-Massestromes in einem Pulver-Gas-Gemisch während der Förderung des Pulver-Gas-Gemisches durch eine Förderleitung. Erfindungsgemäß wird die Geschwindigkeit des Pulver-Gas-Gemisches in der Förderleitung und die Pulvermasse pro Volumeneinheit in einem Abschnitt der Förderleitung gemessen, und der Pulver-Massestrom wird aus der gemessenen Geschwindigkeit, der gemessenen Pulvermasse pro Volumeneinheit und den Abmessungen der Förderleitung berechnet.

EP 0 669 522 A2

Die Erfindung betrifft eine Einrichtung und ein Verfahren zum Messen eines Pulver-Massestromes in einem Pulver-Luft-Gemisch während der Förderung des Pulver-Luft-Gemisches durch eine Förderleitung gemäß dem Oberbegriff von Patentanspruch 1 bzw. von Patentanspruch 6 (DE-A-4105857).

Zur Versorgung von Pulverbeschichtungsgeräten, beispielsweise in elektrostatischen Beschichtungsanlagen, mit Beschichtungspulver wird das Pulver fluidisiert, d.h. das Pulver und mit einem Gas, vorzugsweise Luft durchsetzt, um ein Pulver-Luft-Gemisch zu bilden, und dieses Pulver-Luft-Gemisch wird durch Förderleitungen den Beschichtungsgeräten zugeführt. Dabei kann es notwendig werden, die tatsächlich geförderte und ausgebrachte Pulvermenge pro Zeiteinheit, d.h. den Pulver-Massestrom [in g/min], während des Betriebes der Beschichtungsanlage zu ermitteln, um beispielsweise den Pulvermassestrom auf einen gewünschten Wert einzustellen oder um einen eingestellten Wert einhalten zu können.

Bei Pulverbeschichtungsanlagen nach dem Stand der Technik war es bisher üblich, die zur Pulverförderung mittels Injektoren, oder Venturi-Düsen, benötigten Luftdrücke mit Hilfe von Manometern in bar zu messen oder die zur Förderung benötigten Luftmengen in $m^3/h$ zu bestimmen.

Sowohl die Messung der Luftdrücke als auch die der Luftmengen liefert jedoch nur einen indirekten und unzuverlässigen Hinweis auf die tatsächlich ausgebrachte Pulvermenge. Wenn beispielsweise ein Pulvervorratsbehälter leer ist, werden gleichwohl die Förderdrücke bzw. Luftmengen angezeigt werden, obwohl kein Pulver mehr ausgebracht werden kann.

In der EP-A-297 309 ist ein Verfahren und eine Einrichtung zur Messung und Regelung der Pulvermenge in einer Pulverbeschichtungsanlage beschrieben, mit denen Pulvermengen gemessen werden können, welche pro Zeiteinheit einer Sprühbeschichtungseinrichtung zugeführt werden. Bei dem beschriebenen Verfahren wird die Dichte (c) des Pulvers im Pulver-Gas-Strom von einer Strahlenmeßeinrichtung gemessen, die Gasmenge pro Zeiteinheit (b) im Pulver-Gas-Strom ermittelt und die geförderte Pulvermenge pro Zeiteinheit (c) aus der Gleichung c = a • b bestimmt.

In der US-A-4,807,480 wird ein Verfahren zum Messen der Durchflußrate eines Luft-Pulver-Gemisches beschrieben, bei dem die Geschwindigkeit des Pulver-Luft-Gemisches mithilfe von mit Abstand angeordneten Sensoren erfaßt wird, welche Ladungsschwankungen im Pulver-Luft-Gemisch erfassen. Hierzu wird von einer Korona-Nadel Ladung in das Pulver-Luft-Gemisch injiziert, welche dann von den Sensoren erfaßt wird,

In der JP-A-3-125924 ist ein Durchflußmesser für einen Pulverstrom offenbart, der einen Tracer-Stoff in einen Pulverstrom einbringt und zwei Sätze von Mikrowellen-Gebern und -Empfängern verwendet und deren Signale auswertet, um den Pulver-Massestrom zu ermitteln.

Aufgabe der Erfindung ist es, eine Einrichtung und ein Verfahren vorzusehen, mit denen in einer Pulverbeschichtungsanlage während des Betriebs der Anlage der geförderte Pulver-Massestrom und die ausgebrachte Pulvermenge direkt in g/min gemessen werden können. Dabei soll die Messung des Pulver-Massestromes möglichst genau und zuverlässig sein und aufgrund einer direkten Messung ohne zusätzliche Ladungsinjektion, Tracer-Stoffe oder dgl. erfolgen.

Diese Aufgabe wird erfindungsgemäß durch eine Einrichtung mit den Merkmalen von Anspruch 1 und ein Verfahren mit den Merkmalen von Anspruch 6 gelöst.

Bei der erfindungsgemäßen Einrichtung und dem Verfahren werden zwei Parameter gemessen, nämlich

- die Geschwindigkeit, V, des Pulver-Luft-Gemisches in der Förderleitung in m/sec und
- die Pulvermasse pro Volumeneinheit, $M_V$, in der Förderleitung in $g/cm^3$.

Aus diesen beiden Parametern, V und $M_V$ ergibt sich in Verbindung mit den als bekannt vorausgesetzten Abmessungen der Förderleitung, insbesondere mit dem Förderleitungsquerschnitt, Q, der geförderte und ausgebrachte Pulver-Massestrom, d.h. die Pulvermenge pro Zeiteinheit, $M_T$ in g/min zu:

$$M_T \text{ [g/min]} = V \text{ [m/sec]} * M_V \text{ [g/cm}^3\text{]} * Q \text{ [cm}^2\text{]} * 6000$$

Erfindungsgemäß erfolgt die Messung der Geschwindigkeit mittels zweier mit Abstand zueinander angeordneten Meßelektroden, welche von dem geförderten Pulver-Gas-Gemisch Ladungsschwankungen an der Förderleitung erfassen. Die Messung der Pulvermasse pro Volumeneinheit erfolgt mithilfe eines Mikrowellenresonators, welcher eine Änderung der Dielektrizitätskonstante und/oder der Mikrowellenabsorption in einem Resonanzvolumen der Förderleitung als eine Verschiebung der Resonanzfrequenz bzw. eine Änderung der Mikrowellenamplitude im Resonator erfaßt.

Die Erfindung ist im folgenden anhand bevorzugter Ausführungsformen mit Bezug auf die Zeichnung näher erläutert. Es zeigen:

Fig. 1      eine schematische Darstellung der Geschwindigkeitsmeßvorrichtung der erfindungsgemäßen Einrichtung,

Fig. 2      ein Diagramm der von der Geschwindigkeitsmeßvorrichtung von Fig. 1 erfaßten Signale A und B über der Zeit,

Fig. 3 eine erste Ausführungsform der Massenmeßvorrichtung der erfindungsgemäßen Einrichtung mit einem Mikrowellenresonator,

Fig. 4 eine zweite Ausführungsform der Massenmeßvorrichtung der erfindungsgemäßen Einrichtung mit einem Mikrowellenresonator und

Fig. 5 ein Diagramm der von dem Mikrowellenresonator gemäß der ersten oder der zweiten Ausführungsform erzeugten Signale.

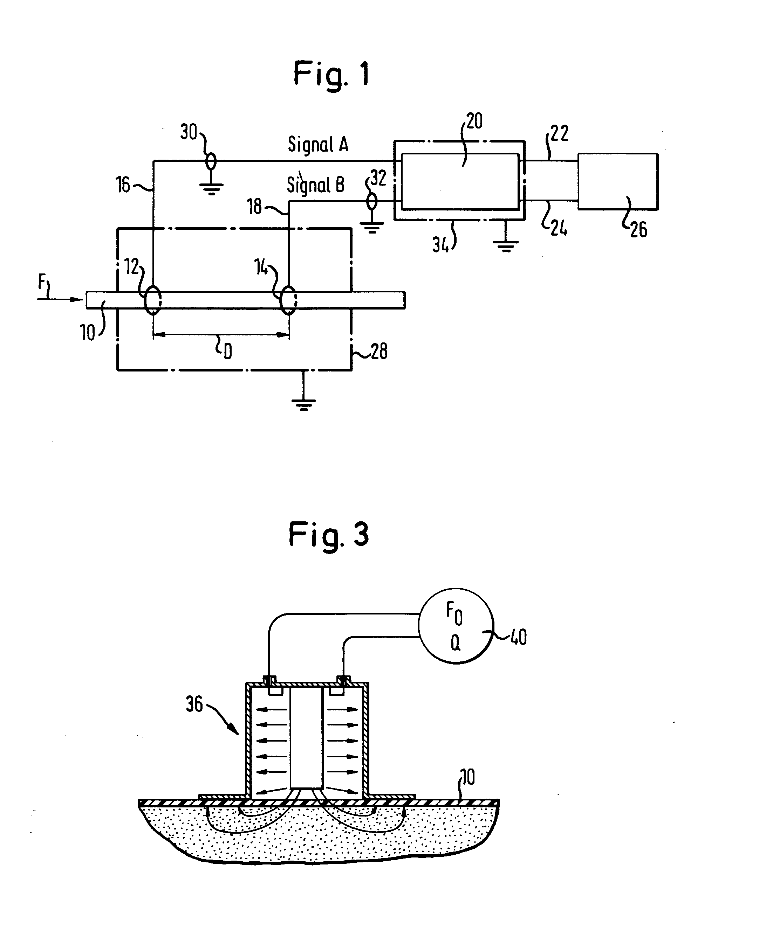

Fig. 1 zeigt einen Abschnitt einer Förderleitung 10 einer Pulverbeschichtungsanlage,durch welche ein Pulver-Luft-Gemisch zu einem Beschichtungsgerät in Pfeilrichtung F gefördert wird. Die Förderleitung 10 besteht im allgemeinen aus einem Kunststoffschlauch, sie kann jedoch auch ein starres Rohr sein oder eine andere für Beschichtungsanlagen geeignete Förderleitung. An der Förderleitung 10 sind mit einem vorgegebenen Abstand D zwei Meßelektroden 12, 14 angebracht, welche über Signalleitungen 16, 18 mit einem Verstärker 20 verbunden sind. Die Ausgänge 22, 24 des Verstärkers 20 sind mit einer Meßwert-Auswertungsvorrichtung 26, beispielsweise einem X(t)-Schreiber, verbunden. Bei der in Fig. 1 gezeigten Ausführungsform der Geschwindigkeitsmeßvorrichtung bestehen die Meßelektroden 12, 14 aus Kupferringen, welche um die Förderleitung 10 herumgelegt sind.

Der Abschnitt der Förderleitung 10, bei dem die Meßanordnung mit den Meßelektroden 12, 14 angeordnet ist, ist von einer geerdeten Abschirmung 28 umgeben. Auch die Signalleitungen 16, 18 und der Verstärker 20 weisen geerdete Abschirmungen 30, 32 bzw. 34 auf. Der Verstärker 20 der gezeigten Ausführungsform ist ein empfindlicher Meßverstärker.

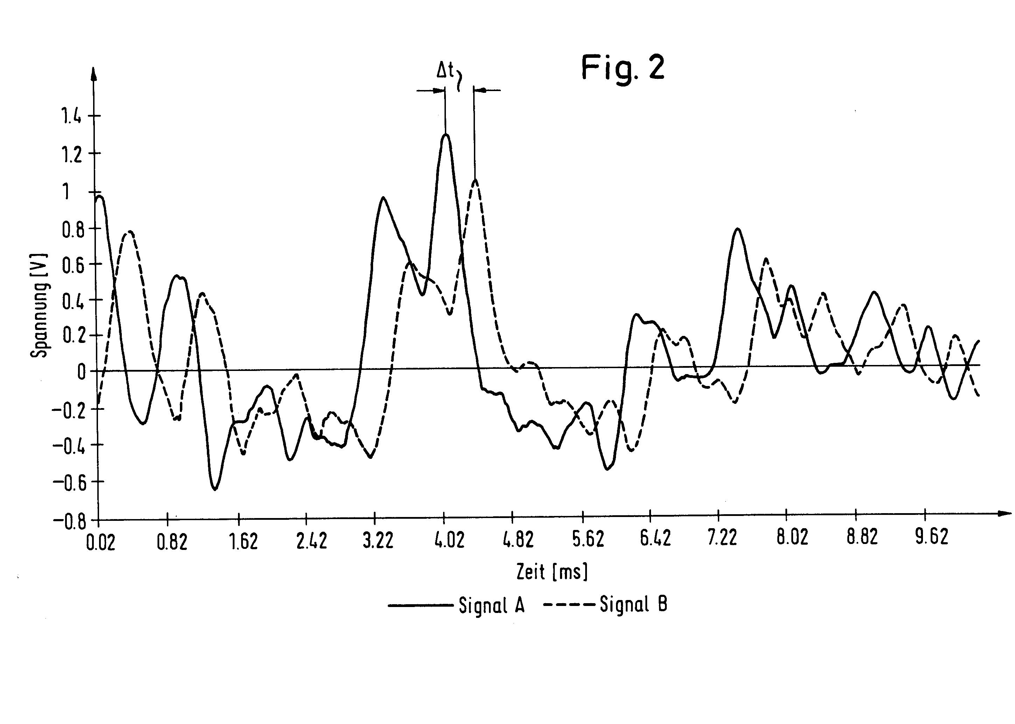

Die Geschwindigkeitsmeßvorrichtung arbeitet wie folgt:
Die Pulverpartikel des durch die Förderleitung 10 transportierten Pulver-Luft-Gemisches laden sich durch Reibung mit dem Kunststoff-Schlauchmaterial elektrostatisch auf. Diese Ladungen influenzieren, oder induzieren, in den beiden in geeignetem Abstand D zueinander angeordneten, an dem Kunststoffschlauch angebrachten Meßelektroden 12, 14 Spannungen, welche über die abgeschirmten Signalleitungen 16, 18 dem empfindlichen Meßverstärker 20 zugeführt werden. Der Verstärker mißt und verstärkt die durch die geladenen Pulverpartikel an den Orten der beiden Elektroden erzeugten Influenzspannungen. Die gemessenen Signale, Signal A von Meßelektrode 12 und Signal B von Meßelektrode 14, sind in Fig. 2 dargestellt. Der zeitliche Verlauf der beiden Signale stimmt weitgehend, zu etwa 97%, überein (Korrelation).

Die verstärkten Signale A, B werden von dem Verstärker 20 an die Meßwert-Auswertungsvorrichtung 26 übergeben, welche die zeitlichen Signalverläufe auf dem X(t)-Schreiber anzeigt und auswertet. Da die Signalverläufe, oder -formen, weitgehend übereinstimmen, ist die eindeutige Bestimmung der Zeitspannen zwischen zwei entsprechenden Signalspitzen möglich, so daß aus der Zeitverschiebung oder dem zeitlichen Versatz $\Delta t$ zwischen den Signalspitzen und dem bekannten Abstand D zwischen die Meßelektroden die Geschwindigkeit V der Pulverpartikel in dem durch die Förderleitung 10 transportierten Pulver-Luft-Gemisch berechenbar ist: $V = D/\Delta t$.

Bei einer modifizierten Ausführungsform der Meßvorrichtung wird die Luft zur Förderung der Pulverpartikel pulsiert, so daß die beiden Meßelektroden an dem Kunststoffschlauch pulsierende Influenzspannungen erfassen. Dadurch ergeben sich anstelle der in Fig. 2 gezeigten weitgehend zufälligen Spannungsschwankungen im wesentlichen periodische Signalverläufe nach Maßgabe der Impulsfrequenz, oder Modulationsfrequenz, welchen lediglich ein geringer Rauschanteil überlagert ist. Aus der Zeitspanne zwischen zwei korrespondierenden Signalspitzen und dem bekannten Abstand D zwischen den Meßelektroden 12, 14 kann dann die Geschwindigkeit V der Pulverpartikel, wie oben beschrieben, bestimmt werden. Der Vorteil dieser modifizierten Ausführungsform der Meßvorrichtung und des Meßverfahrens liegt darin, daß der Meßverstärker, oder Vorverstärker, 20 schmalbandig auf die Modulationsfrequenz abgestimmt werden kann, so daß eine Verbesserung des Signal/Rausch-Verhältnisses erreicht wird.

Bei einer weiteren Ausführungsvariante kann der Nachweis der pulsierenden Ladungen mit Hilfe eines Lock-in Verstärkers zusätzlich phasenempfindlich erfolgen. Die Signale werden dann einerseits frequenzselektiv, schmalbandig auf die Modulationsfrequenz abgestimmt verstärkt, wobei der Lock-in Verstärker andererseits auf eine feste Phase relativ zu dem Anregungspuls eingestellt, oder "eingerastet", werden kann, wobei diese feste Phase aufgrund der bekannten Abmessungen und der Dimensionierung des Geschwindigkeitsmeßsystemes bestimmbar ist. Dadurch wird eine weitere Verbesserung des Signal/Rausch-Verhältnisses erreicht.

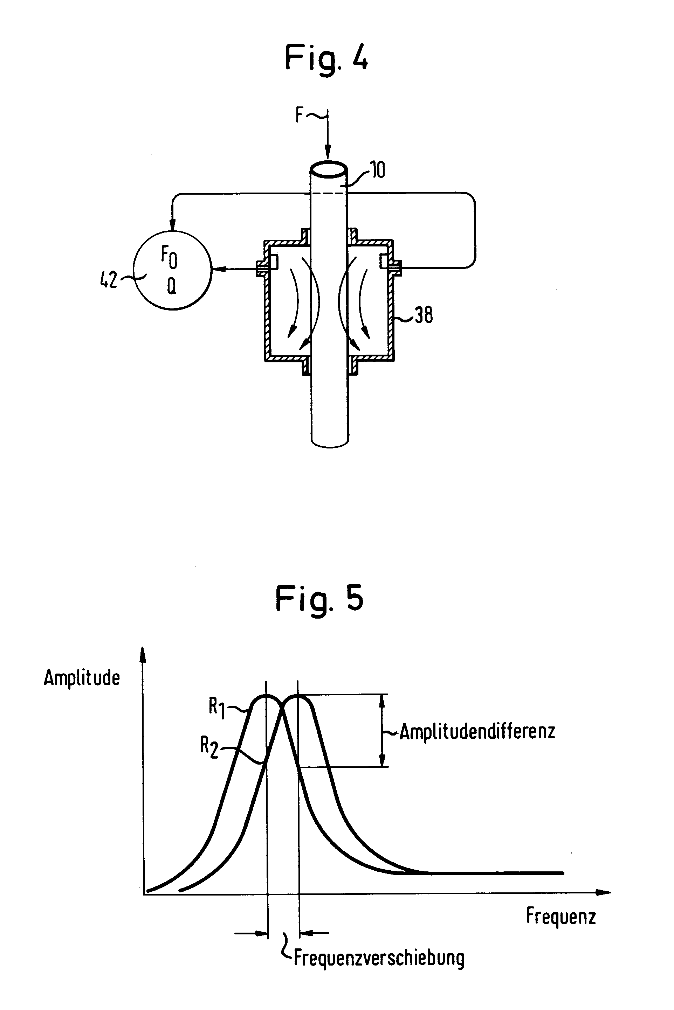

Fig. 3 zeigt eine Ausführungsform eines Mikrowellenresonators 36 der Massenmeßvorrichtung zur Bestimmung der Pulvermenge pro Volumeneinheit in der Förderleitung 10. Der Resonator 36 ist außen an der Oberfläche des von dem Pulver-Luft-Gemisch durchströmten Förderrohres oder Förderschlauches 10 angebracht. Gemäß einer anderen in Fig. 4 gezeigten Ausführungsform ist der Mikrowellenresonator als ein Hohlraumresonator 38 ausgebildet, durch welchen die Förderleitung 10 hindurchverläuft.

Die Funktion der Massenmeßvorrichtung mit dem Mikrowellenresonator 36 oder 38 ist wie folgt:

Ein Teil des von dem Resonator erzeugten Mikrowellenfeldes dringt durch die Wand der Förderleitung 10 in das Pulver-Luft-Gemisch ein. Gemessen werden die Resonanzfrequenz $F_0$ des Resonators oder seine Güte Q. Diese Größen sind von folgenden Materialeigenschaften des Mediums im Resonanzbereich abhängig:

- die Dielektrizitätskonstante und
- die Absorption (Verlustfaktor).

Die Änderungen der Dielektrizitätskonstante und der Absorption sind proportional zu Änderungen der Pulvermenge im Resonanzbereich oder Resonanzvolumen, welches einen bestimmbaren Abschnitt der Förderleitung 10 umfaßt. Daraus ergibt sich, daß eine Änderung der Pulvermenge, d.h. Pulvermasse, im Resonanzvolumen zu einer Verschiebung der Resonanzfrequenz und zu einer Veränderung der Güte und daher der Mikrowellenamplitude führt. In Fig. 5 sind zwei Resonanzkurven $R_1$, $R_2$ für unterschiedliche Pulvermengen im Resonansvolumen gezeigt, wobei in Fig. 5 nur die Frequenzverschiebung zwischen den beiden Kurven $R_1$, $R_2$ gezeigt ist, nicht jedoch die Änderung der Mikrowellenamplitude aufgrund der veränderten Güte. Bei zunehmender Pulvermenge im Resonanzvolumen nimmt die Güte des Mikrowellenresonators ab, so daß die Kurve $R_2$ tatsächlich flacher verläuft als die Kurve $R_1$ und eine geringere Amplitude aufweist. Die Amplitudendifferenz ist in Fig. 5 eingezeichnet.

Durch Messen der Resonanzfrequenzverschiebung oder der Mikrowellenamplitudenänderungbei unterschiedlichen Pulvermengen im Resonanzvolumen ist jeweils die Bestimmung der Pulvermengenänderung im Resonanzvolumen als eine relative Massenbestimmung möglich. Eine absolute Massenbestimmung kann durch eine Kalibrierung des Mikrowellenresonators auf eine Bezugs-Resonanzfrequenz und eine Bezugs-Mikrowellenamplitude für eine vorgegebene bekannte Pulvermenge erfolgen. Aufgrund einer Resonanzfrequenzverschiebung oder einer Mikrowellenamplitudenänderung relativ zu der Bezugsfrequenz oder der Bezugsamplitude ist dann die Pulvermenge im Resonanzvolumen relativ zu der vorgegebenen bekannten Pulvermenge bestimmbar, so daß die absolute Pulvermasse pro Volumeneinheit aus der gemessenen Resonanzfrequenzverschiebung $\Delta F_0$ oder der Veränderung der Mikrowellenamplitude, bzw. Veränderung der Güte Q, relativ zu den Bezugsgrößen in geeigneten Auswertungsvorrichtungen 40 bzw. 42 ermittelt werden kann.

Aus der gemessenen Geschwindigkeit des Pulver-Luft-Gemisches V, der gemessenen Pulvermasse pro Volumeneinheit, $M_V$ und dem Querschnitt Q der Förderleitung 10 kann dann in einer nicht gezeigten Rechenvorrichtung durch Multiplikation der Pulver-Massestrom in der Förderleitung, d.h. die pro Zeiteinheit geförderte Pulvermenge, berechnet werden.

Die in der vorstehenden Beschreibung, der Zeichnung und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein.

## Patentansprüche

1. Einrichtung zum Messen eines Pulver-Massestromes in einem Pulver-Gas-Gemisch während der Förderung des Pulver-Gas-Gemisches durch eine Förderleitung, mit
   einer Geschwindigkeitsmeßvorrichtung (12-26) zum Messen der Geschwindigkeit des Pulver-Gas-Gemisches in der Förderleitung (10),
   einer Massenmeßvorrichtung (36, 40; 38, 42) zum Messen der Pulvermasse pro Volumeneinheit in einem Abschnitt der Förderleitung (10) und
   einer Rechenvorrichtung zum Berechnen des Pulver-Massestromes aus der gemessenen Geschwindigkeit, der gemessenen Pulvermasse pro Volumeneinheit und den Abmessungen der Förderleitung (10),
   dadurch **gekennzeichnet**, daß
   die Geschwindigkeitsmeßvorrichtung zwei mit Abstand zueinander an der Förderleitung vorgesehene Meßelektroden (12, 14) aufweist, die von dem geförderten Pulver-Gas-Gemisch erzeugten Ladungsschwankungen an der Förderleitung (10) erfassen, und aus den erfaßten Ladungsschwankungen die Geschwindigkeit des Pulver-Gas-Gemisches ermittelt, und
   die Massenmeßvorrichtung einen Mikrowellenresonator (36; 38) aufweist, welcher eine Änderungen der Dielektrizitätskonstante und/oder der Mikrowellenabsorption in einem Resonanzvolumen der Förderleitung als eine Verschiebung der Resonanzfrequenz bzw. eine Änderung der Mikrowellenamplitude im Resonator (36; 38) erfaßt, und aus der erfaßten Änderung die Pulvermenge im Resonanzvolumen ermittelt.

2. Einrichtung nach Anspruch 1, dadurch gekennzeichnet, daß die Meßelektroden (12, 14) Spannungssignale (A, B) bilden, welche den erfaßten Ladungsschwankungen entsprechen, und an eine Meßwertverarbeitungsvorrichtung (26) ausgeben, welche aus dem zeitlichen Versatz ($\Delta t$) zwischen den Spannungssignalen und dem vorgegebenen Abstand (D) zwischen den Meßelektroden (12, 14) die Geschwindigkeit des Pulver-Gas-Gemisches ermittelt.

3. Einrichtung nach Anspruch 1 oder 2, dadurch gekennzeichnet, daß die Meßelektroden die Förderleitung (10) umgebende Ringelektroden (12, 14) sind und daß die Meßwertverarbeitungsvorrichtung einen Meßverstärker (20) zum Verstärken der Spannungssignale und eine Auswertungsvorrichtung (26) aufweist, welche den zeitlichen Versatz zwischen Extremwerten der verstärkten Spannungssignale erfaßt.

4. Einrichtung nach einem der vorangehenden Ansprüche, dadurch gekennzeichnet, daß der Mikrowellenresonator (36) außen an der Oberfläche der Förderleitung (10) angebracht ist.

5. Einrichtung nach einem der vorangehenden Ansprüche 1 bis 3, dadurch gekennzeichnet, daß der Mikrowellenresonator (38) einen die Förderleitung (10) umgebenden Hohlraumresonator aufweist.

6. Verfahren zum Messen eines Pulver-Massestromes in einem Pulver-Gas-Gemisch während der Förderung des Pulver-Gas-Gemisches durch eine Förderleitung (10), bei dem die Geschwindigkeit des Pulver-Gas-Gemisches in der Förderleitung (10) gemessen wird,
die Pulvermasse pro Volumeneinheit in einem Abschnitt der Förderleitung (10) gemessen wird und
aus der gemessenen Geschwindigkeit, der gemessenen Pulvermasse pro Volumeneinheit und vorbekannten Abmessungen der Förderleitung der Pulver-Massestrom durch die Förderleitung (10) berechnet wird,
dadurch **gekennzeichnet**, daß
bei der Geschwindigkeitsmessung an zwei voneinander entfernten Meßstellen (12, 14) von dem geförderten Pulver-Gas-Gemisch an der Oberfläche der Förderleitung (10) erzeugte Ladungsschwankungen erfaßt werden, die erfaßten Ladungsschwankungen in Spannungssignale umgewandelt werden und die Geschwindigkeit des Pulver-Gas-Gemisches aus dem zeitlichen Versatz zwischen diesen Spannungssignalen und dem Abstand der Meßstellen ermittelt wird, und bei der Messung der Pulvermasse pro Volumeneinheit eine Änderung der Dielektrizitätskonstante und/oder der Mikrowellenabsorption in einem bestimmten Abschnitt der Förderleitung als eine Verschiebung der Resonanzfrequenz bzw. eine Änderung der Mikrowellenamplitude in einem Mikrowellenresonator erfaßt wird und daraus die in diesem Abschnitt der Förderleitung (10) vorhandene Pulvermasse ermittelt wird.

7. Verfahren nach Anspruch 6, dadurch gekennzeichnet, daß das Pulver-Gas-Gemisch pulsierend durch die Förderleitung (10) gefördert wird, um erfaßbare Ladungsschwankungs-Maxima und Minima zu erzeugen.

8. Verfahren nach einem der Ansprüche 6 oder 7, dadurch gekennzeichnet, daß der Pulver-Massestrom ($M_T$) als Produkt der gemessenen Geschwindigkeit (V), der gemessenen Pulvermasse pro Volumeneinheit ($M_V$) und des Querschnitts (Q) der Förderleitung berechnet wird:

$$M_T = V * M_V * Q$$

# Fig. 1

# Fig. 3

Fig. 2

# Fig. 4

# Fig. 5